# EUROPEAN PATENT APPLICATION

(11) **EP 1 734 471 A2**
(43) Date of publication of application: **20.12.2006**
(21) Application number: 06397008.1
(22) Date of filing: 06.06.2006
(51) Int. Cl.: G06Q 10/00

(54) **Method and arrangement for using RFID means in connection with transport means, and RFID arrangement for use in the method**

(30) Priority: 14.06.2005 FI 20050627
(71) Applicant: TAMTRON OY, 33561 Tampere (FI)
(72) Inventor: Asikainen, Pentti, 35800, Mänttä (FI)
(74) Representative: Kupiainen, Juhani Kalervo

(57) **Abstract**

The object of the invention is a method and an arrangement (100) for using RFID means (104, 110) in connection with transport means (102). Particularly the invention concerns managing logistics flows in connection with loading and unloading goods by means of RFID means. In the arrangement the transport means (102) has first RFID means (104) for storing identification data of the transport means (102). Additionally the arrangement (100) comprises also load handling means (106) for handling load (108) of the transport means, to which load handling means relates second RFID means (110) for reading the RFID means (104) of the transport means (102) and for identifying the transport means (102) and/or for writing data relating to load (108) to be handled to the RFID means (104) of the transport means (102).

## Description

The invention concerns a method and an arrangement for using RFID (Radio Frequency Identification) means in association with transport means and RFID arrangement for use in the method. Particularly the invention relates to administering logistic flows and data transfer by means of RFID means in connection with loading and unloading goods to be transported.

The present logistic flows are enormous while large quantities of goods are transported from various starting points to various destinations. Thus inventory is an important field of technology in the transport of goods. From prior art are known e.g. solutions, wherein transport means collects certain goods according to the freight warrant from e.g. an accurately determined port of the staring point, or alternatively some loader loads the transport means within the loading site. Goods can nowadays mostly be identified with a bar code or similar relating to the goods, thus facilitating the logistics and inventory in both loading and unloading goods into or from the transport means. It is also known from the prior art to use a freight warrant and/or receipt in connection with loading transport means, wherein the freight warrant / receipt is delivered to the receiver of the goods e.g. together with the transport means.

Further, from publication WO 02/061657 A1 it is known to administer inventory in a truck with RFID means in connection with loading and unloading. In the solution of the document the transportable goods are equipped with RFID means, whereby the load inside the truck can be determined by reading the RFID means of the goods with RFID reading means of the truck, preferably in connection with closing the door of the cargo space of the truck.

However, some problems are related to the prior art. Due to e.g. enormous logistic flows and human factors a loader may easily mistake transport means, for example, and load the goods into wrong transport means. Further, e.g. maintaining bookkeeping on loading and observing weight of transport means is tedious due to continuous loading and unloading, and it may be difficult for the driver of the transport means to continuously know the information relating to the exact quantity, weight and destination, and above all, whether all goods aboard are meant just for the concerned transport means for transportation.

It is an object of the invention to create a solution for managing logistic flows in such a way that the above mentioned disadvantages of the prior art can be reduced. The invention aims at solving, how it can be confirmed easily and quickly and unambiguously that correct transport means is loaded. Further, the invention aims at solving that at least the load and the weight of the transport means is known all the time in spite that load is continuously either unloaded or loaded. Still further the invention aims at creating a solution, according to which the load information of the transport means could be found out quickly and easily and unambiguously at the unloading site without being necessary for the transport means to stop.

The objects of the invention are achieved with an arrangement according to claim 1 and a method according to claim 8, meant for using RFID means in connection with transport means, and further with an RFID arrangement according to claim 14. Additionally the objects of the invention can be achieved by means of additional features disclosed in dependent claims.

It is characteristic to an arrangement according to the invention for using RFID means in connection with transport means for managing logistic flows what is disclosed in claim 1. It is characteristic to a method according to the invention using RFID means in connection with transport means what is disclosed in claim 8. It is characteristic to an RFID arrangement according to the invention for usage in some method according to the invention what is disclosed in claim 14. Further some advantageous embodiments of the invention are disclosed in dependent claims.

In this patent application e.g. following terms are used:
- "Transport means" is e.g. a truck, a ship or a train.
- "A load" can be any load which can be transported with a transport means, such as goods, container, tank or similar, timber or soil.
- "Load related data" is e.g. information on the loaded goods, on the loader, on quantity of the goods, and on weight, prevailing environmental conditions, loading site and destination.
- "Load handling means" is e.g. a loader or unloading means, such as a wheel loader, a forklift, a container crane, an industrial crane or a timber crane.
- "RFID means" (Radio Frequency Identification) is data transfer and memory means, which is equipped with storage capacity and wireless data transfer means. In the invention the first RFID means is most preferably means, which are related to transport means, and wherein data identifying the transport means has been stored, such as registration mark of the transport means. In the invention the second RFID means is preferably means, which is related to loader means, with which means data of the first RFID means can be read and/or data can be written into the first RFID means. The second RFID means is most preferably integrated in connection to loader means, but alternatively it can also be a second RFID means, which is separate from loader means, such as e.g. means located at load unloading site, by which transport means drive so that said second RFID means can read data related to transport means and/or a loader included in first RFID means, and possibly print or display said data.

According to a first embodiment of the invention transport means meant for transporting load is equipped with first RFID means, in which identification information of the transport means are stored, such as registration number or other corresponding information unambiguously identifying the transport means. When loading or unloading load at least part of the data included in the first RFID means of the transport means is read. The data is most preferably read by second RFID means for identifying the transport means and verifying that correct transport means is concerned. Additionally, when loading or unloading, load data relating to the load under handling is written to the RFID means of the transport means, such as for example, data about the loaded load is added into the RFID means, or data relating to unloaded load included in the RFID means is changed.

According to a second embodiment of the invention, in addition to reading identification data relating to load and/or transport means included in the first RFID means, which relates to the transport means, at least part of them is also displayed/printed to either display means, computer, data system and/or paper. Reading the data is preferably affected by means of second RFID means, and printing by means of some other device, which is in data transfer connection with said second RFID means.

According to a third embodiment of the invention, when load of the transport means is unloaded in the unloading site, data included in the first RFID means, which is related to the transport means, is read and the transport means is identified by means of said data with help of the second RFID means, which is related to the unloading site. Additionally, according to the invention data relating to the load can be read from first RFID means, which relates to the transport means, and stored to a data system relating to the unloading site and/or at least part of the data can be printed/displayed to display means, a computer, a data system and/or on paper.

According to a fourth embodiment of the invention data relating to load and included in the first RFID means, which relates to the transport means, can be deleted, added or changed by means of e.g. second RFID means, which relate to the unloading site, at least if the load content of the transport means has been changed, such as if load has been unloaded, for example.

According to a fifth embodiment of the invention second RFID means relating to the unloading site is preferably integrated into load handling means, such as load unloading means. Alternatively or in addition to the fifth embodiment the second RFID means, which relates to the unloading site, can be RFID means, which is located in connection with loading or unloading site. Additionally, said RFID means, especially the first RFID means, can be write protected so that only authorised parties can change data included in said first RFID means. With this it can be assured that e.g. not just any unloader of load can delete or add or change data relating to such load, which in no way relates to activity of said just any loader.

The invention thus provides significant advantages in relation to prior art solutions. For example, the invention makes it possible that the quality, destination, loading site, loading time, loader and/or weight of the load of the transport means is accurately known all the time. According to the invention e.g. the reception area of timber can read the loading site of the timber from the RFID data of the transport means, whereby it can be concluded relatively accurately, based on earlier acquired data, for example, the growing area of said timber and based on this, its fibre content. If the first RFID means is within the timber or timber block itself, the growth area information can be utilised when determining fibre content at the loading and/or unloading site and/or in a data system.

Additionally the invention makes it also possible that data relating to service, repair and inspection history of the transport means can be stored by means of e.g. RFID means of the party, which has performed the service, repair or inspection, into the RFID means of the transport or loading means. Further, the systems of e.g. the police or customs can be equipped with second RFID means according to the invention for reading and/or writing first RFID means of transport means. Then the police, for example, can read data relating to the load of the transport means or the transport means, e.g. when passing by said transport means, or correspondingly customs can read said data when the transport means drives by the customs. Also, at the roadsides second RFID means according to the invention can be arranged for reading data of transport means driving on the roads and their load, and for a possible further handling, such as delivering the read data forward. Still further, a ship or a ferry tranporting trucks, for example, can be equipped with second RFID means according to the invention, whereby the personnel of the ship or ferry knows in real time the amount or type of the goods under transport, for example, in regards to safety aspects.

In the following part preferred embodiments of the invention are described referring to the accompanying drawings, in which
- Fig. 1: illustrates an exemplary arrangement for using RFID means in connection with transport means for managing logistic flows at a loading site according to a preferred embodiment of the invention,
- Fig. 2: illustrates an exemplary arrangement for using RFID means in connection with transport means for managing logistic flows at an unloading site of load according to a preferred embodiment of the invention,
- Fig. 3: illustrates exemplary RFID means for using in connection with transport means for managing logistic flows according to a preferred embodiment of the invention, and
- Fig.4: illustrates an exemplary method for using RFID means in connection with transport means for managing logistic flows according to a preferred embodiment of the invention.

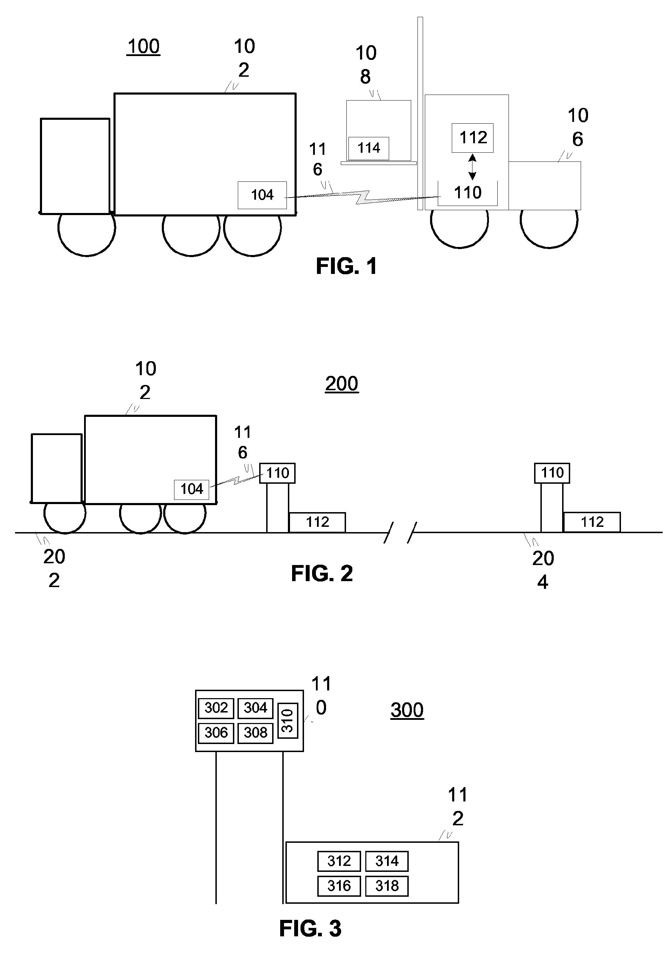

Figure 1 illustrates an exemplary arrangement 100 for using RFID means in connection with transport means 102 for managing logistic flows e.g. on loading site according to a preferable embodiment of the invention, in which transport means 102 there is first RFID means 104. Identification data, such as the registration number, has preferably been stored in the RFID means 104. The arrangement 100 also comprises load handling means 106 for handling load 108 of the transport means. The load handling means 106 has second RFID means 110 for reading the RFID means of the transport means and for identifying the transport means 102, and for writing data relating to the load 108 under handling to the RFID means 104 of the transport means 102. According to one embodiment of the invention the second RFID means 110 is considered to include data processing means 112, which is in data transfer connection with said second RFID means 110. The data processing means 112 can be in connection with data system relating to the loading and/or unloading site and/or to data system located in a vehicle and/or to data system of other doer of the logistics chain.

According to the invention e.g. the loading means 106 on the loading site, such as a forklift, gets loading instructions to its data processing means 112 to load a certain load 108 into a determined transport means 102. The forklift 106 collects the load 108, and according to one embodiment of the invention, weighs it at the same time. Alternatively the load may have been weighed already earlier, and the weight of the load may have been stored in the RFID means 114 of the load, for example. The second RFID means 110 comprised in the forklift can preferably read the weight of the load from the RFID means of the load, or the weight can be delivered in other way to the forklift, preferably to the data processing means 112.

After this the forklift 106 approaches the transport means 102 to be loaded, with the load 108 aboard, whereby the second RFID means comprised in the forklift 106 identifies the first RFID means 104 comprised in the transport means 102, and reads the included identification data. By means of said identification data the forklift driver can be assured of loading the correct transport means. In the loading situation e.g. data relating to the load 108, such as weight of the load and/or the contents of the load, can be stored in the first RFID means comprised in the transport means. The data is preferably stored by means of the second RFID means 110 comprised by the loading means 106. Said second RFID means of the loading site comprises most preferably both writing means and reading means.

According to one embodiment of the invention also load 108 can be equipped with RFID means, which include identification data of the load 108. Then the forklift driver can be assured also about the load to be loaded that the correct load is loaded to the transport means.

According to one embodiment of the invention said first and second RFID means 104, 110, are in data transfer connection with each other via a wireless data transfer method 116.

Figure 2 illustrates an exemplary arrangement 200 for using RFID means in connection with transport means 102 for managing logistic flows at the load unloading site according to one embodiment of the present invention. At the load unloading site 202 there is preferably second RFID means 110 for reading the first RFID means 104 of the transport means 102. In said second RFID means there is at least reading means for reading said first RFID means.

According to one embodiment of the invention, when the transport means arrives to the unloading site 202, the transport means 102 drives by second RFID means 110, whereby said second RFID means identifies the first RFID means 104 comprised by the transport means 102 and reads at least part of its included data. To said second RFID means 110 also data processing means 112 is preferably related, which may be directly in connection with the second RFID means 110 or alternatively at a distance from that, whereby the second RFID means is arranged into data transfer connection with said data processing means 112.

When the transport means 102 drives by the second RFID means 110 comprised by the unloading site the data related the transport means and/or load and included in the first RFID means 104 comprised by the transport means 102 can at least in part be brought to the knowledge of the unloading site by means of the second RFID means 110. According to one embodiment of the invention output means for outputting the read data at least in part visually by means of some display means or on paper is related (directly or indirectly) to the second RFID means 110. The data can also be output to a computer and/or a data system.

According to one embodiment of the invention said second RFID means 110 is arranged to delete or otherwise update data relating to load, included in the RFID means 104, related to the transport means 102, at least if contents of the load of the transport means has been changed at the unloading site.

Now it must be noted that even if the second RFID means 110 comprised by the unloading site 202 is RFID means located by the roadside, said second RFID means may alternatively or in addition to this be located also in a loading means (not shown in the Figure) operating at the unloading site. Further, it must be noticed that Figure 2 illustrates also another second RFID means 110, which is preferably located at the roadside 204 and at a distance from an unloading site, for reading data of first RFID means 104 of passing transport means 102 and possibly for further delivery of the read data.

According to the invention said first and second RFID means 104, 110 are in data transfer connection with each other via a wireless data transfer method 116.

Figure 3 illustrates an exemplary RFID arrangement 300 for use in connection with logistics flows according to one preferable embodiment of the invention. The RFID arrangement preferably comprises at least RFID means 110, which has at least reading means 302, but according to one embodiment also data transfer means 306, such as an antenna and a memory 308 and a power supply 310. According to the invention the RFID means 110 is preferably in data connection to e.g. loading and/or unloading site and/or with data processing means 112, which data processing means according to one embodiment of the invention comprises a processor 312, a memory 314 and data transfer means 316 and output means 318, such as a printer and/or a display.

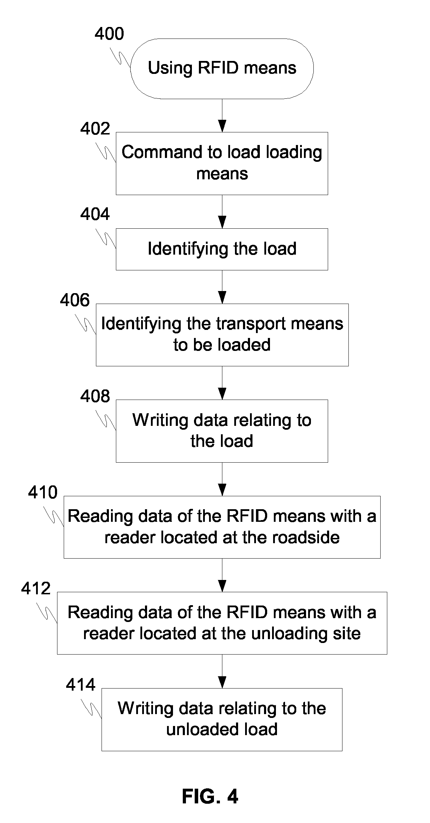

Figure 4 illustrates one exemplary method 400 for using RFID means in connection with transport means for managing logistics flows according to one preferable embodiment of the invention, in which method loading means gets a command for loading transport means with a certain load in phase 402. In phase 404 (optional) the loading means identifies and collects the load, and in phase 406 the loading means identifies the transport means to be loaded. In phase 408 the loading means writes data relating to the load into the RFID means of the transport means.

After loading in phase 410 (optional) some second RFID means, such as one of customs, police or one locating by a road or other corresponding second RFID means, reads data comprised by the RFID means of the transport means and possibly forwards at least part of said data. The second RFID means may also write/store inspection, approval, point of time, through-passage, radioscopy or other corresponding data to the first RFID means. In phase 412 the second RFID means relating to an unloading site or located at loading means operating at an unloading site reads data of RFID means of transport means and possibly forwards at least part of said data. Further in phase 414 (optional) second RFID means relating unloading site or located at loading means, which operates at an unloading site writes data relating to load, most preferably data relating to the unloaded load, into the RFID means of the transport means.

It must be noted that the second RFID means can also be separate or integrated fixed or mobile terminal, with which the data to be transferred to the first RFID means are input in part or totally manually or by means of wired or wireless data transfer connection. The first RFID can also be read and/or protected with the second RFID means previously described.

Above only some embodiments of a solution according to the invention have been described. The principle of the invention can naturally be modified within the scope determined by the patent claims, for example, concerning details of implementation and areas of use. Especially the method can be applied when loading or unloading load, but also in monitoring traffic.

## Claims

1. Arrangement (100, 200) for using RFID-means (104, 110) in connection with transport means (102) for managing logistic flows, wherein the transport means has first RFID means (104) for storing identification data of the transport means, **characterised in that** the arrangement further comprises load handling means (106) for handling the load (108) of the transport means, to which load handling means relates second RFID means (110) for reading the RFID means (104) of the transport means and for identifying the transport means (102) and/or for writing data relating to load to be handled (108) to the RFID means (104) of the transport means.

2. An arrangement according to claim 1, wherein the load handling means (106) is a loader or unloading means, such as a wheel loader, a forklift, a container crane, an industrial crane or a timber crane, and wherein the transport means (102) is a truck, a ship or a train.

3. An arrangement according to any of the preceding claims, wherein said second RFID means (110) is arranged, in addition to reading identification data relating to load and/or the transport means, included in the first RFID means (104) relating to the transport means (102), to output and/or transfer at least part of said data of the first RFID means (104).

4. An arrangement according to any of the preceding claims, wherein when load of the transport means is unloaded at an unloading site (202), a second RFID means relating to an unloading site is arranged to read data included in the first RFID means (104) related to the transport means (102) and to identify the transport means (102) by means of said data, and/or a second RFID means (110) relating to the unloading site (202) is arranged to read data relating to load from first RFID means (104) relating to the transport means and to store them to a data system (112) relating to the unloading site and/or to output at least a part of said data with display means, on paper, to computer and/or to a data system.

5. An arrangement according to claim 4, wherein second RFID means (110) relating to a loading site is arranged to delete or otherwise update data relating to load and included in the first RFID means (104), which relates to the transport means, at least if the load contents of the transport means (102) has been changed.

6. An arrangement according to claim 4 or 5, wherein the second RFID means (110) relating to the unloading site (202) is in the load handling means (106), or is RFID (110) means located in connection with operating area of the load handling means, such as loading or unloading site.

7. An arrangement according to any of the preceding claims, wherein the first RFID means (104) is write protected so that only authorised parties can change and/or read data included in the first RFID means.

8. A method (400) for using RFID means (104, 110) in connection with transport means for managing logistics flows, wherein the transport means (102) has first RFID means (104) for storing identification of the transport means, **characterised in that** in the method at least part of data included in the first RFID means of the transport means is read by means of second RFID means (110) related to load handling means (106) for identifying the transport means (102), and/or data relating to load (108) to be handled is written to RFID means (104) of the transport means.

9. A method according to claim 8, wherein identification data relating to load and/or the transport means included in the RFID means (104) is read, and at least part of said data of the first RFID means (104) is output by means of display means, paper printer, computer and/or data system related to second RFID means (110).

10. A method according to any of previous claims 8-9, wherein when load of the transport means (102) is unloaded at an unloading site (202), data included in the first RFID means (104) of transport means (102) is read and the transport means (102) is identified by means of said data by means of second RFID means (110) relating to an unloading site (202), and/or data relating to load (108) is read from the first RFID means (104) relating to transport means (102) and stored into a data system (112) or computer, and/or at least part of said data is output to display means, a computer, a data system and/or on paper by means of second RFID means related to an unloading site (202).

11. A method according to claim 10, wherein data relating to load (108), included in the first RFID means (104) of the transport means (102), is deleted or otherwise updated by means of second RFID means (110) relating to unloading site (202), at least if the contents of the transport means has been changed.

12. A method according to claim 10 or 11, wherein second RFID means (110) relating to an unloading site is in load handling means (106) or RFID means (110) located in connection with operating area of the load handling means, such as loading or unloading site (202).

13. A method according to any of the preceding claims 8-12, wherein the first RFID means (104) is read protected and/or write protected so that only authorised parties can read, write and/or change data included in said first RFID means (104).

14. RFID arrangement (300) for use in a method according to any of the claims 8-12, **characterised in that** the RFID arrangement comprises at least RFID read/write means (302, 304) relating to load handling means (106) meant for loading of the transport means, which RFID read/write means is arranged to read data included in the RFID means (104) of the transport means, and to identify the transport means by means of data included in the RFID means (104) of the transport means and/or to write/read data relating to load to/from the RFID means (104) of the transport means (102).
